# EUROPEAN PATENT APPLICATION

(11) **EP 4 764 251 A1**
(43) Date of publication of application: **24.06.2026**
(21) Application number: 24221131.6
(22) Date of filing: 18.12.2024
(51) Int. Cl.: F16H 3/089

(54) **A TRANSMISSION, A POWERTRAIN, A VEHICLE AND A METHOD FOR OPERATING THE TRANSMISSION**

(71) Applicant: Volvo Truck Corporation, 405 08 Göteborg (SE)
(72) Inventor: Folkesson, Johan, 511 62 Skene (SE); Hedman, Anders, 442 67 Marstrand (SE)
(74) Representative: Valea AB

(57) **Abstract**

The present disclosure relates to a transmission (1) for a vehicle (100) comprising a first shiftable gear arrangement (10) and a second shiftable gear arrangement (20), and a range gear arrangement (30) drivingly connected to an output shaft (50), wherein the range gear arrangement (30) is shiftable between at least a low range gear state and a high range gear state, wherein first shiftable gear arrangement (10) is configured to selectively transmit torque from the first input shaft (11) to the range gear arrangement (30) and the second shiftable gear arrangement (20) is configured to selectively transmit torque from the second input shaft (21) to the range gear arrangement, wherein the transmission (1) is further shiftable to a by-pass gear state, in which the second shiftable gear arrangement (20) is shifted to a by-pass gear, such that power is transferrable from the second input shaft (21) to the output shaft (50) without passing through the range gear arrangement (30).

## Description

### TECHNICAL FIELD

The disclosure relates generally to vehicles. In particular aspects, the disclosure relates to a transmission, a powertrain, a vehicle and a method for operating a transmission. The disclosure can be applied to heavy-duty vehicles, such as trucks, buses, and construction equipment, among other vehicle types. In particular, the disclosure can be applied to electric or hybrid vehicles. Although the disclosure may be described with respect to a particular vehicle, the disclosure is not restricted to any particular vehicle.

### BACKGROUND

Range gear arrangements are often used in multi-speed transmissions, particularly in heavy-duty vehicles like trucks, to provide a wider variety of gear ratios. A range gear arrangement is essentially a way of using gears in different ranges, such as a low and a high gear range, to increase the number of available gear ratios.

There is a strive to develop improved technology relating to multi-speed transmissions comprising a range gear arrangement, such as to improve shifting so that smoother shifting is enabled. In particular, there is a need for improved transmissions enabling shifting without torque interruption.

### DEFINITIONS

In order to facilitate the reading of the disclosure, a number of frequently used gear ratios are defined in the following.

The gear ratio of the first/second shiftable gear arrangement is herein referred to as the ratio of the rotational speed of the first/second input shaft and the rotational speed of an outgoing shaft of the first/second gear arrangement. In some non-limiting examples of the present disclosure the outgoing shaft of the first/second gear arrangement may be a main shaft. In the by-pass gear state, however, the outgoing shaft of the second shiftable gear arrangement may be the output shaft.

The gear ratio of the range gear arrangement is herein defined as the ratio of the rotational speed of an ingoing shaft of the range gear arrangement and the rotational speed of the output shaft. In some non-limiting examples of the present disclosure, the ingoing shaft of the range gear arrangement may be the main shaft.

The gear ratio of the first/second reduction gear set is defined as the ratio of rotational speed of the first/second power unit and the rotational speed of the first/second input shaft.

The gear ratio of the by-pass gear is referred to as the ratio of rotational speed of the second input shaft and the rotational speed of the output shaft, when the by-pass gear is transferring power.

The gear ratio of the set of high range gears is defined as the ratio of the rotational speed of the first/second input shaft and the rotational speed of the output shaft when the transmission is in the high range gear state.

The gear ratio of the set of low range gears is defined as the ratio of the rotational speed of the first/second input shaft and the rotational speed of the output shaft when the transmission is in the low range gear state.

The overall gear ratio of the transmission from the first/second power unit to the output shaft is defined as the ratio of rotational speed of the first/second power unit and the rotational speed of the output shaft.

Further, throughout the disclosure, the wording "rotationally connected to" and "rotationally connect" should be interpreted such that a component of the transmission arrangement is connected to another component of the transmission arrangement in such a way that the components rotate in the same direction and with the same rotational speed. Hence, the rotationally connected components rotate in the same direction, around the same axis, with the same rotational speed, and can transfer torque to each other. The term "rotationally connectable to" should be interpreted as "selectively connectable for common rotation with".

Throughout the disclosure, the wording "drivingly connected to" and "drivingly connect" should be interpreted such that components of the transmission arrangement are arranged in such a way that they can transfer torque to each other and such that they rotate with rotational speeds that are proportional to each other, i.e. such that their gear ratio is constant. The term "drivingly connectable to" should be interpreted as "selectively connectable for torque transfer with a defined gear ratio".

### SUMMARY

According to a first aspect of the disclosure, there is provided a transmission for a vehicle comprising a first shiftable gear arrangement and a second shiftable gear arrangement. The first shiftable gear arrangement is shiftable between a first plurality of gears with different gear ratios and the second shiftable gear arrangement is shiftable between a second plurality of gears with different gear ratios. The first shiftable gear arrangement is drivingly connected to a first input shaft and the second shiftable gear arrangement is drivingly connected to a second input shaft. The first input shaft is configured to be drivingly connected to a first power unit and the second input shaft is configured to be drivingly connected to a second power unit.

Further, the transmission comprises a range gear arrangement drivingly connected to an output shaft. The range gear arrangement is shiftable between at least a low range gear state and a high range gear state, wherein a gear ratio of the range gear arrangement in the low range gear state is greater than a gear ratio of the range gear arrangement in the high range gear state.

The first shiftable gear arrangement is configured to selectively transmit torque from the first input shaft to the range gear arrangement using one of the gears of the first plurality of gears and the second shiftable gear arrangement is configured to selectively transmit torque from the second input shaft to the range gear arrangement using one of the gears of the second plurality of gears, such that the range gear arrangement together with the first and/or second shiftable gear arrangement provides a set of low range gears and a set of high range gears between one or both of the input shafts and the output shaft,

Further, the transmission is shiftable to a by-pass gear state, in which the second shiftable gear arrangement is shifted to a by-pass gear, the by-pass gear being comprised in the second plurality of gears, such that power is transferrable from the second input shaft to the output shaft without passing through the range gear arrangement.

The first aspect of the disclosure may seek to provide an in at least some aspect improved transmission. In particular, the first aspect may seek to provide a transmission enabling shifting without torque interruptions, i.e. with retained power transfer to the output shaft. A technical benefit may include appropriately good vehicle performance in terms of drivability, driver comfort, and/or improved energy efficiency.

Optionally in some examples, including in at least one preferred example, the range gear arrangement is further shiftable to a neutral range gear state, and, in the by-pass gear state, the range gear arrangement is shiftable between the high range gear state, the low range gear state and the neutral range gear state without torque interruption between the second input shaft and the output shaft. A technical benefit may include shifting between the states of the range gear arrangement without torque interruption. Hence, a good performance of the vehicle in terms of drivability and/or energy efficiency may be provided.

Optionally in some examples, including in at least one preferred example, the transmission further comprises a first reduction gear set, wherein the first input shaft is configured to be drivingly connected to the first power unit via the first reduction gear set, and/or a second reduction gear set, wherein the second input shaft is configured to be drivingly connected to the second power unit via the second reduction gear set. A technical benefit may include a more flexible arrangement of the power units compared to a direct connection with the input shafts. Further, the gear ratio of the reduction gear sets can be used to achieve suitable overall transmission ratios from the power units to the output shaft.

Optionally in some examples, including in at least one preferred example, a gear ratio of the first reduction gear set is different from a gear ratio of the second reduction gear set. The gear ratio of the reduction gear sets is herein referred to as a ratio between the rotational speed of the respective power unit to the respective input shaft. By combination of the reduction gear sets with the plurality of gears of the first and/or the second shiftable gear arrangement and/or the range gear arrangement, a plurality of overall gear ratios from the respective power units to the output shaft of the transmission may be achieved. Hence, a technical benefit may include providing an appropriate number of overall gear ratios from the respective power units to the output shaft.

Optionally in some examples, including in at least one preferred example, the first shiftable gear arrangement comprises a first gear engagement member configured to select one of first plurality of gears of the first shiftable gear arrangement, and wherein the second shiftable gear arrangement comprises a second gear engagement member configured to select one of the second plurality of gears of the second shiftable gear arrangement, the second plurality of gears comprising the by-pass gear. A technical benefit may include facilitated gear selection within each shiftable gear arrangement.

Optionally in some examples, including in at least one preferred example, the transmission further comprises a main shaft and a plurality of main gear sets, each main gear set comprising a plurality of gearwheels, wherein the main shaft is rotationally connected or connectable to a gearwheel of the plurality of gearwheels of each main gear set and to a rotating part of the range gear arrangement. A technical benefit may include facilitation of the gears of the first and second shiftable gear arrangement (except of the by-pass gear) on a common main shaft and interconnection of said pluralities of gears with the range gear arrangement in a simple manner with few parts.

Optionally in some examples, including in at least one preferred example, the transmission further comprises a common countershaft rotationally connected to a gearwheel of a common gear set, wherein the common gear set is one of the plurality of main gear sets. The first gear engagement member is configured to selectively couple the first input shaft to the common countershaft and the second gear engagement member is configured to selectively couple the second input shaft to the common countershaft. A technical benefit may include providing a transmission with few parts, since the common gear set may be usable by both shiftable gear arrangements.

Optionally in some examples, including in at least one preferred example, the countershaft is arranged in between the first input shaft and the second input shaft, such that the countershaft is coaxial and aligned with at least one of the first and the second input shaft. A technical benefit may include a compact transmission design.

Optionally in some examples, including in at least one preferred example, the transmission further comprises a by-pass gear set comprising a plurality of gearwheels, wherein the by-pass gear set is drivingly connected to the output shaft, and wherein, in the by-pass gear state, the second gear engagement member is configured to rotationally connect the second input shaft to a gearwheel of the by-pass gear set. A technical benefit may include an efficient and compact provision of the by-pass gear facilitating shifting without torque interruption, in particular when shifting between gear states of the range gear arrangement.

Optionally in some examples, including in at least one preferred example, the transmission further comprises a differential gear arrangement drivingly connected to the output shaft and to respective drive shafts of a drive axle of the vehicle. A technical benefit may include allowing different speeds at the different wheels of the drive axle.

Optionally in some examples, including in at least one preferred example, in the by-pass gear state, the transmission has a gear ratio from the second input shaft to the output shaft which is smaller than a gear ratio of the highest gear in the set of low range gears and greater than a gear ratio of the lowest gear in the set of high range gears. The gear ratio from the second input shaft to the output is herein defined as the ratio of the rotational speed of the second input shaft to the rotational speed of the output shaft, when the second input shaft and the output shaft are drivingly connected via the second shiftable gear arrangement. Hence, when shifting through the different gears from the low range gears to the high range gears, the by-pass gear is sequentially between the low range gears and the high range gears. A technical benefit may include facilitated shifting through a sequence of gears without torque interruption.

Optionally in some examples, including in at least one preferred example, the range gear arrangement comprises a planetary gear set, the planetary gear set comprising a sun gearwheel, a planet carrier carrying one or more planet gearwheels, and a ring gearwheel. A technical benefit may include a compact design of the range gear arrangement.

Optionally in some examples, including in at least one preferred example, a gearwheel of the by-pass gear set is connected or connectable to the planet carrier of the planetary gear set. Thereby, suitable gear ratios of the range gear arrangement may be achieved.

Optionally in some examples, including in at least one preferred example, the sun gearwheel of the planetary gear set is drivingly connected to the main shaft. Thereby, suitable gear ratios of the range gear arrangement may be achieved.

Optionally in some examples, including in at least one preferred example, in the high range gear state of the range gear arrangement, the ring gearwheel of the planetary gear set and the sun gearwheel of the planetary gear set are fixed to each other for common rotation. A technical benefit may include an appropriate gear ratio in the high range gear state.

Optionally in some examples, including in at least one preferred example, in the low range gear state of the range gear arrangement, the ring gearwheel of the planetary gear set is connected to a fixed node of the transmission. A technical benefit may include an appropriately large gear ratio in the low range gear state.

Optionally in some examples, including in at least one preferred example, the range gear arrangement comprises a range gear shifting member for selecting the high range gear state and the low range gear state. A technical benefit may include facilitated shifting between the gear states of the range gear arrangement.

According to a second aspect of the disclosure, there is provided a powertrain for a vehicle comprising a first power unit, a second power unit, and the transmission according to the first aspect. Advantages and advantageous features of the powertrain according to the second aspect are largely analogous to the advantages and advantageous features of the transmission according to the first aspect.

According to a third aspect of the disclosure, there is provided a vehicle comprising a powertrain according to the second aspect. Advantages and advantageous features of the vehicle according to the third aspect are largely analogous to advantages and advantageous features of the transmission according to the first aspect.

According to a fourth aspect of the disclosure, there is provided a method for operating a transmission according to the first aspect, comprising:
- operating the transmission in one of a high range gear state and a low range gear state,
- shifting the transmission to the by-pass gear state, and
- when the transmission is provided in the by-pass gear state, shifting the range gear arrangement from the high range gear state to the low range gear state or vice versa.

The fourth aspect of the disclosure may seek to provide an in at least some aspect improved method of operating a transmission. In particular, the first aspect may seek to provide a method enabling shifting without torque interruptions. A technical benefit may include appropriately good vehicle performance in terms of drivability, driver comfort, and/or improved energy efficiency.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** schematically illustrates a transmission according to an example.
**FIG. 3** schematically illustrates a range gear according to an example.
**FIG. 4** schematically illustrates a transmission according to another example.
**FIG. 5** schematically illustrates a transmission according to another example.
**FIG. 6** schematically illustrates a transmission according to another example.
**FIG. 7** is a flowchart of a method according to an example.

### DETAILED DESCRIPTION

The detailed description set forth below provides information and examples of the disclosed technology with sufficient detail to enable those skilled in the art to practice the disclosure.

An aim of the present disclosure is to alleviate at least one drawback of the prior art, or at least to provide a suitable alternative. In particular, an aim of the present disclosure is to avoid torque interruptions while shifting a transmission. Thereby, the overall vehicle performance and drivability may be improved. The problem is solved by providing a transmission and a method for operating the transmission. Thereby, a transmission and a vehicle with improved performance and energy efficiency may be provided.

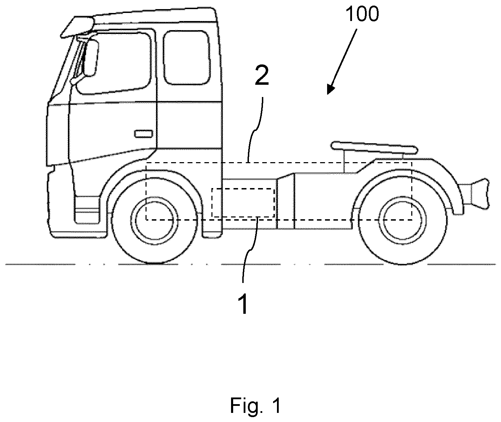

**FIG. 1** schematically depicts a vehicle **100** in the form of a heavy-duty towing truck. The vehicle comprises a transmission **1** comprised in a powertrain **2.**

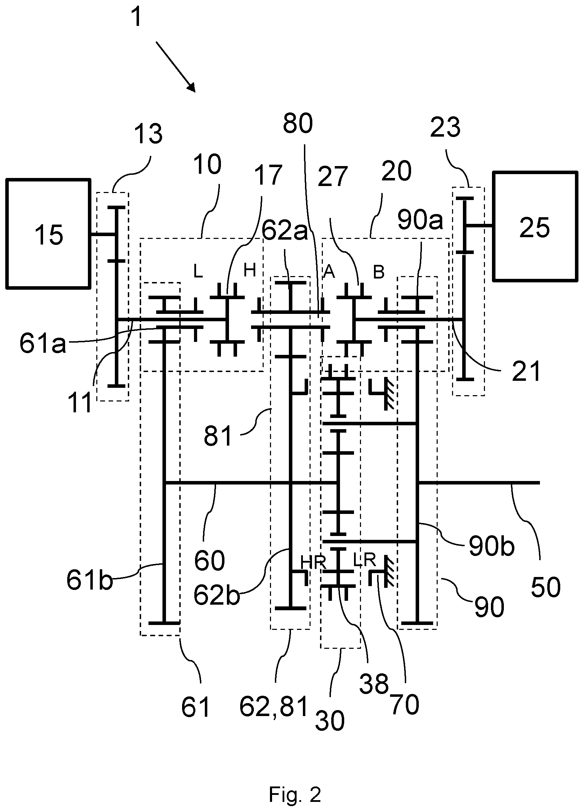

**FIG. 2** is a schematic representation of a transmission **1** according to examples of the present disclosure. As can be seen from the figure, the transmission **1** may be configured to be connected to a first power unit **15** and a second power unit **25.** The respective power units **15/25** may be drivingly connected to a first input shaft **11** and a second input shaft **21,** respectively. For example, a first and a second reduction gear set **13/23** may be used to drivingly connect the respective power units **15/25** to the respective input shafts **11, 21.** The first and the second reduction gear set **13/23** may have different gear ratios.

The first input shaft **11** may be connected to a first shiftable gear arrangement **10.** Likewise, the second input shaft **21** may be connected to a second shiftable gear arrangement **20.** The first shiftable gear arrangement **10** may be configured to selectively transmit torque from the first input shaft **11** to a range gear arrangement **30** using a first plurality of gears with different gear ratios. Analogously, the second shiftable gear arrangement **20** may be configured to selectively transmit torque from the second input shaft **21** to a range gear arrangement **30** using a second plurality of gears with different gear ratios. In the example illustrated in **Fig. 2****,** the first shiftable gear arrangement **10** and the second shiftable gear arrangement **20** each are connectable to two gear states, i.e. the first plurality of gears and the second plurality of gears each comprise two gears. However, it is conceivable that any number of gears in the first and second plurality of gears may be realized.

The range gear arrangement **30** may be connected or connectable to an output shaft **50** of the transmission **1.** The range gear arrangement **30** may be configured to selectively transmit torque from one or both of the first shiftable gear arrangement **10** and the second shiftable gear arrangement **20** to an output shaft **50** using different range gear states, such as a high range gear state and a low range gear state with different gear ratios. As such, a gear ratio of the range gear arrangement **30** in the low range gear state may be greater than a gear ratio of the range gear arrangement **30** in the high gear state. Hence, by using the first and the second shiftable gear arrangements together with the range gear arrangement **30,** the transmission **1** provides a set of low range gears and a set of high range gears from one or both of the first power unit **15** and the second power unit **25** to the output shaft **50.** It may of course be conceivable that the range gear arrangement **30** comprises further range gears states, such as one or more intermediate range gear states.

In addition, the transmission **1** may comprise a by-pass gear. The by-pass gear may be considered a direct link between one of the input shafts (here the second input shaft **21)** to the output shaft **50.** Hence, using the by-pass gear torque may be transmitted from the second input shaft **21** to the output shaft **50** without torque transmission through the range gear arrangement **30.** Thereby, shifting is enabled between the range gear states without torque interruption. The by-pass gear may be part of the second plurality of gears selectable by the second shiftable gear arrangement **20.**

In some examples, the first shiftable gear arrangement **10** may comprise a first gear engagement member **17.** Accordingly, the second shiftable gear arrangement **10** may comprise a second gear engagement member **27.** The first and the second gear engagement member **17/27** may be clutches. As illustrated in **Fig. 2****,** the first gear engagement member **17** may be configured to selectively connect the first input shaft **11** to respective pinion gearwheels **61a/62a** of a plurality of main gear sets **61/62,** each main gear set **61/62** comprising a plurality of gearwheels, such as at least one pinion gearwheel **61a/62a** and at least one bull gearwheel **61b/62b.** The bull gearwheels **61b/62b** of the main gear sets **61/62** may be arranged on a main shaft **60.** Also, the second gear engagement member **27** may be configured to selectively connect the second input shaft **21** to pinion gearwheels **61a/62a** of some of the main gear sets **61/62** connected to the main shaft **60.** In other words, there may be at least one common gear set **81** (in **Fig. 2** identical with gear set **62)** which is used by both the first and the second shiftable gear arrangement **10/20.** The at least one common gear set **81** may comprise a pinion gearwheel **62a** arranged on a common countershaft **80.** Hence, both the first power unit **15** and the second power unit **25** may be drivingly connectable to the output shaft **50** via the common countershaft **80.** The main shaft **60** may further be rotationally connected or connectable to a rotating member of the range gear arrangement **30.** The by-pass gear is realized by a by-pass gear set **90** comprising a plurality of gearwheels, such as at least one pinion gearwheel **90a** and at least one bull gearwheel **90b.** The bull gearwheel **90b** may be rotationally connected to the output shaft **50.** Hence, the second gear engagement member **27** may be configured to selectively connect the second input shaft **21** to one of the at least one common gear sets **81** via the common countershaft **80** or to the by-pass gear set **90.** When the second gear engagement member **27** connects the second input shaft **21** to the pinion gearwheel **90a** of the by-pass gear set **90,** a direct connection between the second input shaft **21** and the output shaft **50** is provided with a gear ratio of the by-pass gear set **90.** In this by-pass gear state, the range gear arrangement **30** and/or the first shiftable gear arrangement **10** may be shifted while still providing torque from the second power unit **25** to the output shaft **50.** Hence, the by-pass gear can be used to shift between the range gear states without torque interruption.

As already mentioned, both the first shiftable gear arrangement **10** and the second shiftable gear arrangement **20** may comprise more than two gear states. Accordingly, the transmission **1** may include more than two main gear sets **61/62** and/or more than one common gear set **81.**

In some examples, in the by-pass gear state, the transmission **1** has a gear ratio from the second input shaft **21** to the output shaft **50** which is smaller than a gear ratio of the highest gear in the set of low range gears and greater than a gear ratio of the lowest gear in the set of high range gears. In other words, the by-pass gear has a gear ratio which is in between the gear ratios of the set of low range gears and those of the set high range gears. Hence, when shifting through the transmission from the lowest gears to the highest gears, e.g., while accelerating the vehicle **100,** the low range gears are followed by the by-pass gear. When the by-pass gear is engaged the range gear arrangement **30** is shifted from the low range gear state to the high range gear state. Thereafter, the high range gears are used. Hence, a seamless shifting performance can be achieved without torque interruption. Further, a convenient gear shifting sequence from low gears to high gears may be achieved even when shifting through the by-pass gear.

A non-limiting example of a gear shifting sequence is further elaborated by a non-limiting example of the transmission **1** in which the first and the second shiftable gear arrangements **10/20** both have two gear states. Accordingly, in this example, the transmission **1** may have two main gear sets **61/62,** one of which may be a common gear set **81.** In this example, the first shiftable gear arrangement **10** may have two gear states marked by **L** and **H** in **Fig. 2****.** Further, the second shiftable gear arrangement **20** may have two gear states marked by **A** and **B** in **Fig. 2****.** Also, the range gear arrangement **30** may, in this example, have two gear states, i.e. the high range gear state **HR** and the low range gear state **LR.** In this example, the first and the second shiftable gear arrangement **10/20** together with the range gear arrangement 30 give a number of possible gear shifting combinations, shown in **Table 1. Table** 1 shows the resulting gears and gear combinations when the range gear arrangement **30,** the first shiftable gear arrangement **10** and the second shiftable gear arrangement **20** are in one of their respective positions. Odd numbered gears are herein gears in which the first power unit **15** is drivingly

**Table 1: Gear combinations**

| Gear/gear combination | Range gear arrangement 30 | First shiftable gear arrangement 10 | Second shiftable gear arrangement 20 |
|---|---|---|---|
| 1&4 | **LR** | **L** | **B** |
| 1 | **LR** | **L** | |
| 1&2 | **LR** | **L** | **A** |
| 2 | **LR** | | **A** |
| 2&3 | **LR** | **H** | **A** |
| 3 | **LR** | **H** | |
| 3&4 | **LR** | **H** | **B** |
| 4 | | | **B** |
| 4&5 | **HR** | **L** | **B** |
| 5 | **HR** | **L** | |
| 5&6 | **HR** | **L** | **A** |
| 6 | **HR** | | **A** |
| 6&7 | **HR** | **H** | **A** |
| 7 | **HR** | **H** | |
| 7&4 | **HR** | **H** | **B** |

connected and the second power unit **25** is drivingly disconnected from the transmission **1.** Even numbered gears are gears in which the first power unit **15** is disconnected and the second power unit **25** is drivingly connected to the transmission **1.** The by-pass gear is here the fourth gear. Hence, in this example, there are seven gears connecting one of the power units **15/25** to the output shaft **50** with different gear ratios. Further, these gears can be combined in numerous ways to drivingly connect both of the first power unit **15** and the second power unit **25** at the same time to the output shaft **50.**

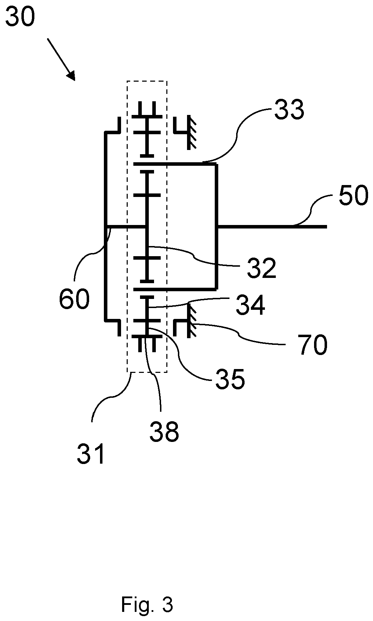

Turning to **Fig. 3****,** examples of the range gear arrangement **30** are elaborated in further detail. Purely by way of an example, the range gear arrangement **30** may comprise a planetary gear set **31.** The planetary gear set **31** may comprise a sun gearwheel **32,** a planet carrier **33** carrying one or more planet gearwheels **34,** and a ring gearwheel **35.** Further, the range gear arrangement **30** may comprise a range gear shifting member **38** for selectively choosing one of the range gear states. In some examples, the range gear shifting member **38** may be arranged to selectively connect the ring gearwheel **35** to a fixed node **70** of the transmission **1.** When the ring gearwheel **35** is rotationally fixed to a fixed node **70** of transmission **1,** i.e. the ring gearwheel **35** is rendered immobile, a relatively large gear ratio of the range gear arrangement **30** is achieved. Hence, this configuration is suitable for the low range state. Further, the range gear shifting member **38** may be arranged to selectively couple the ring gearwheel **35** to another component of the planet gear set **31.** In the non-limiting example illustrated in **Fig. 3****,** the ring gearwheel **35** may be couplable to the sun gearwheel **32.** Thereby, a comparably small gear ratio may be achieved, in this example a direct 1:1 speed relation, which may be suitable for the high range gear state. In some examples, the output shaft **50** may be rotationally connected the planet carrier **33** and the sun gearwheel **32** may be rotationally connected to the main shaft **60.** However, other combinations are conceivable by a person skilled in the art. For example, the output shaft **50** may be rotationally connected to the sun gear **32** and the main shaft **60** to the planet carrier **33.**

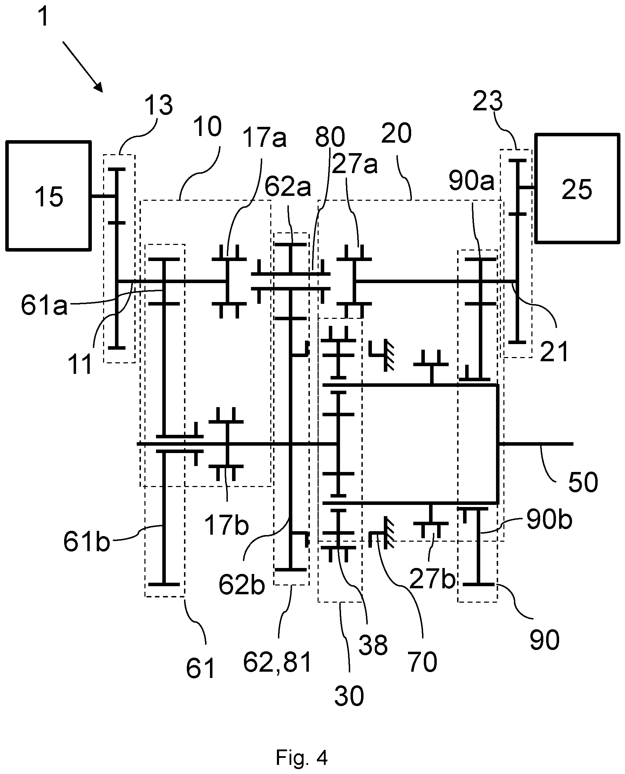

**Fig. 4** shows another exemplary embodiment of a transmission **1** according to the present disclosure. Here, the first shiftable gear arrangement **10** may comprise a first input shaft gear engagement member **17a** and a main shaft gear engagement member **17b.** The first input shaft gear engagement member **17a** may be configured to selectively couple the first input shaft **11** to the common countershaft **80,** thus drivingly connecting the input shaft **11** to the common gear set **81,** whereas the pinion gearwheel **61a** of the other main gear set **61** is fixedly connected to the input shaft **11.** The main shaft gear engagement member **17b** may be configured to selectively couple the main shaft **60** to the bull wheel **61b** of the main gear set **61.** In case the transmission comprises more than two main gear sets **(61, 62),** the transmission **1** may comprise one main shaft engagement member **17b** for each main gear set **61** which is not part of the common gear set(s) **81.** Analogously, a second input shaft gear engagement member **27a** may be configured to selectively couple the second input shaft **21** to the common countershaft **80,** whereas the pinion gearwheel **90a** of the by-pass gear set **90** is fixedly connected to the second input shaft **21.** An output shaft gear engagement member **27b** may be configured to selectively couple the bull gearwheel **90b** to the output shaft **50.** The embodiment of **Fig. 4** may have the advantage that more parts of the transmission can be put to a neutral state, i.e. less parts are rotating when they are not needed. Further, the pinion gearwheels **61a/90a** of the main gear sets **61** and the by-pass gear set **90** can be directly coupled to, or integrated in, the respective input shafts **11/21,** which may allow for a stronger and stiffer construction.

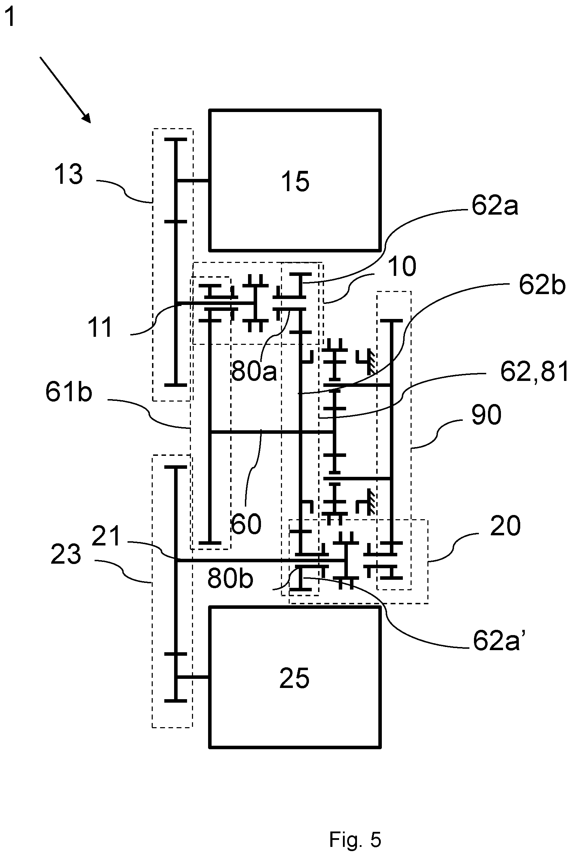

**Fig. 5** shows another exemplary embodiment of the present disclosure. Here, the input shafts **(11, 21)** may not be arranged coaxially. As with the embodiments explained above, the input shafts are connected to the first shiftable gear arrangement **10** and the second shiftable gear arrangement **20,** respectively. As before, the at least one common gear set **81** is at least one of the main gear **61/62.** In the example illustrated in Fig. 4, there is one common gear set **81** which is the main gear set **62.** The example of Fig. 5 differs from the examples explained above in the at least one common gear **81** comprises two pinion gear wheels **62a/62a'** which both are rotationally connected to the bull gear **62b.** The pinion gear wheels **62a/62a'** are in turn connectable to respective countershafts **80a/80b** of the first and the second shiftable gear arrangement **10/20.** In other words, according to this embodiment, the transmission 1 does not comprise a common countershaft **80.** Instead, two separate countershafts **80a/80b** are connectable to two respective pinion gear wheels **62a/62a'.** Hence, the at least one common gear, represented by the common gear set **81,** can be selected by the first shiftable gear arrangement **10** by drivingly connecting the first input shaft **11** to the first counter shaft **80a.** Further, the at least one common gear, can also be selected by the second shiftable gear arrangement **20** by drivingly connecting the second input shaft **21** to the second counter shaft **80b.** Due to the non-coaxial arrangement of the input shafts **11/21** a flexible arrangement of the power units **15/25** may be achieved.

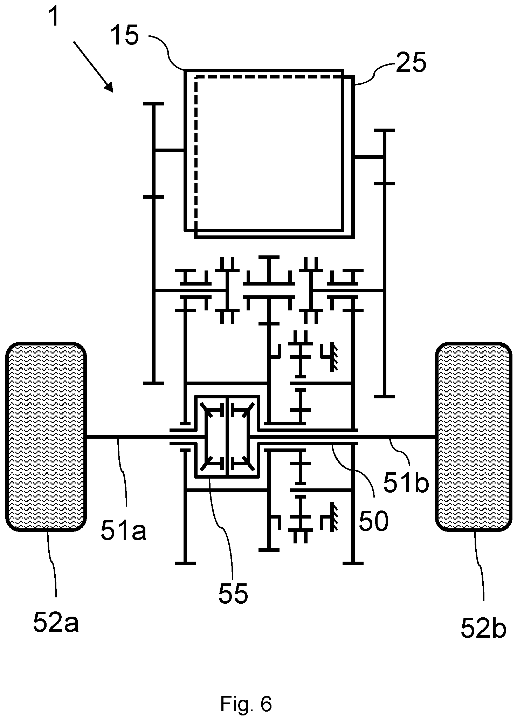

Another exemplary embodiment of the disclosure is shown in **Fig. 6****.** According to this embodiment, the output shaft **50** may be configured to be drivingly connected to a differential gear arrangement **55.** The differential gear arrangement **55** is in turn arranged to drive respective drive shafts **51a/51b** of an axle of the vehicle **100.** The drive shafts **51a/51b** are connected to respective ground engaging members **52a/52b,** such as wheels.

**Fig. 6** also shows the power units **15/25** being arranged in an axially overlapping manner as seen in an axial direction of the input shafts **11/21.** This axially overlapping arrangement may obviously also be an option for the other embodiments shown in **Figs. 2** and **4****.** The axially overlapping arrangement may have the benefit of providing a transmission **1** which may demand less space in the vehicle **100.**

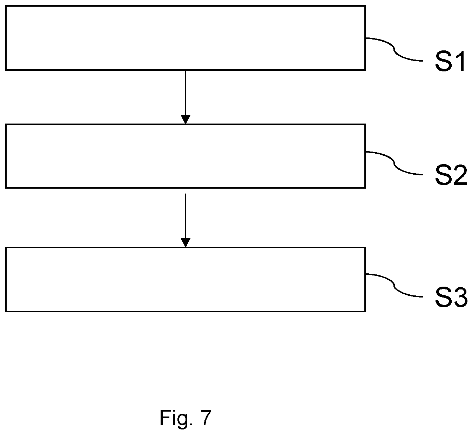

A method for operating a transmission 1 of the present disclosure is illustrated in **Fig. 7****.** The method may comprise the following actions:

**Action S1:** operating the transmission **1** in one of a high range gear state and a low range gear state.

**Action S2:** shifting the transmission **1** to the by-pass gear state.
As elaborated above, shifting to the by-pass gear state may comprise shifting the second shiftable gear arrangement **20** to the by-pass gear by shifting the second gear engagement member **27** to couple the second input shaft **21** with the by-pass gear set **90.**

**Action S3:** When the transmission **1** is provided in the by-pass gear state, shifting the range gear arrangement **30** from the high range gear state to the low range gear state or vice versa.

Using the by-pass gear state, the transmission **1** can be shifted from the low range gear state to the high range gear state or vice versa without torque interruption, since the torque path goes directly from the second input shaft **20** to the output shaft **50** via the by-pass gear set **90,** i.e. without passing through the range gear arrangement **30.**

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

By a "driving connection" between two rotating parts is herein intended that torque can be transmitted between the parts, and that the rotational speeds of the parts are proportional. When two gearwheels are drivingly connected, torque can be transmitted between the gearwheels. This may be achieved by the gearwheels being in meshing engagement, or by a first gearwheel being in meshing engagement with a second gearwheel, which is in turn in meshing connection with a third gearwheel, or by a first gearwheel being in meshing engagement with a second gearwheel, which is rotationally connected to a third gearwheel, which is in turn in meshing connection with a fourth gearwheel. Thus, in order to be drivingly connected, it is not necessary that two gearwheels are in meshing engagement. It is sufficient that the rotation of one of the gearwheels inevitably leads to the rotation of the other one of the gearwheels.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

In the following, possible features and feature combinations of the present disclosure are presented as a list of numbered Examples.

Example 1: A transmission (1) for a vehicle (100) comprising:
- a first shiftable gear arrangement (10) and a second shiftable gear arrangement (20), the first shiftable gear arrangement (10) being shiftable between a first plurality of gears with different gear ratios and the second shiftable gear arrangement (20) being shiftable between a second plurality of gears with different gear ratios, wherein the first shiftable gear arrangement (10) is drivingly connected to a first input shaft (11) and the second shiftable gear arrangement (20) is drivingly connected to a second input shaft (21), wherein the first input shaft (11) is configured to be drivingly connected to a first power unit (15) and the second input shaft (21) is configured to be drivingly connected to a second power unit (25), and
- a range gear arrangement (30) drivingly connected to an output shaft (50), wherein the range gear arrangement (30) is shiftable between at least a low range gear state and a high range gear state, wherein a gear ratio of the range gear arrangement (30) in the low range gear state is greater than a gear ratio of the range gear arrangement (30) in the high range gear state, wherein the first shiftable gear arrangement (10) is configured to selectively transmit torque from the first input shaft (11) to the range gear arrangement (30) using one of the gears of the first plurality of gears and the second shiftable gear arrangement (20) is configured to selectively transmit torque from the second input shaft (21) to the range gear arrangement using one of the gears of the second plurality of gears, such that the range gear arrangement (30) together with the first and/or second shiftable gear arrangement (10, 20) provides a set of low range gears and a set of high range gears between one or both of the input shafts (11, 21) and the output shaft (50),
wherein the transmission (1) is further shiftable to a by-pass gear state, in which the second shiftable gear arrangement (20) is shifted to a by-pass gear, the by-pass gear being comprised in the second plurality of gears, such that power is transferrable from the second input shaft (21) to the output shaft (50) without passing through the range gear arrangement (30).

Example 2: The transmission (1) according to example 1, wherein the range gear arrangement (30) is further shiftable to a neutral range gear state, and wherein, in the by-pass gear state, the range gear arrangement (30) is shiftable between the high range gear state, the low range gear state and the neutral range gear state without torque interruption between the second input shaft (21) and the output shaft (50).

Example 3: The transmission (1) according to examples 1 or 2, further comprising: a first reduction gear set (13), wherein the first input shaft (11) is configured to be drivingly connected to the first power unit (15) via the first reduction gear set (13), and/or a second reduction gear set (23), wherein the second input shaft (21) is configured to be drivingly connected to the second power unit (25) via the second reduction gear set (23).

Example 4: The transmission (1) according to example 3, wherein a gear ratio of the first reduction gear set (13) is different from a gear ratio of the second reduction gear set (23).

Example 5: The transmission (1) according to any one of the preceding examples, wherein the first shiftable gear arrangement (10) comprises a first gear engagement member (17) configured to select one of first plurality of gears of the first shiftable gear arrangement (10), and wherein the second shiftable gear arrangement (20) comprises a second gear engagement member (27) configured to select one of the second plurality of gears of the second shiftable gear arrangement (20), the second plurality of gears comprising the by-pass gear.

Example 6: The transmission (1) according to any one of the preceding examples, further comprising a main shaft (60) and a plurality of main gear sets (61, 62), each main gear set (61, 62) comprising a plurality of gearwheels (61a, 61b, 62a, 62b), wherein the main shaft (60) is rotationally connected or connectable to a gearwheel (61b, 62b) of the plurality of gearwheels of each main gear set (61, 62) and to a rotating part of the range gear arrangement (30).

Example 7: The transmission (1) according to example 6, further comprising at least one main shaft gear engagement member (17b) configured to selectively couple the main shaft (60) to a gearwheel (61b) of the plurality of gearwheels of one of the main gear sets (61).

Example 8: The transmission (1) according to example 6 or 7, when dependent on example 5, further comprising a common countershaft (80) rotationally connected to a gearwheel of a common gear set (81), wherein the common gear set (81) is one of the plurality of main gear sets (61, 62), wherein the first gear engagement member (17) is configured to selectively couple the first input shaft (11) to the common countershaft (80) and the second gear engagement member (27) is configured to selectively couple the second input shaft (21) to the common countershaft (80).

Example 9: The transmission (1) according to example 8, wherein the countershaft (80) is arranged in between the first input shaft (11) and the second input shaft (21), such that the countershaft (80) is coaxial and aligned with at least one of the first input shaft (11) and the second input shaft (21).

Example 10: The transmission (1) according to examples 5-9, further comprising a by-pass gear set (90) comprising a plurality of gearwheels (90a, 90b), wherein the by-pass gear set (90) is drivingly connected to the output shaft (50), wherein, in the by-pass gear state, the second gear engagement member (27) is configured to rotationally connect the second input shaft (21) to a gearwheel (90a) of the by-pass gear set (90).

Example 11: The transmission (1) according to example 10, further comprising a output shaft gear engagement member (27b) configured to selectively couple the output shaft (50) to a gearwheel (90b) of the plurality of gearwheels (90a, 90b) of the by-pass gear set (90).

Example 12: The transmission (1) according to any one of the preceding examples, further comprising a differential gear arrangement (55) drivingly connected to the output shaft (50) and to respective drive shafts (51a, 51b) of a drive axle of the vehicle (100).

Example 13: The transmission (1) according to any one of the preceding examples, wherein, in the by-pass gear state, the transmission (1) has a gear ratio from the second input shaft (21) to the output shaft (50) which is smaller than a gear ratio of the highest gear in the set of low range gears and greater than a gear ratio of the lowest gear in the set of high range gears.

Example 14: The transmission (1) according to any one of the preceding examples, wherein the range gear arrangement (30) comprises a planetary gear set (31), the planetary gear set (31) comprising a sun gearwheel (32), a planet carrier (33) carrying one or more planet gearwheels (34), and a ring gearwheel (35).

Example 15: The transmission (1) according to example 12, wherein a gearwheel (90b) of the by-pass gear set (90) is connected or connectable to the planet carrier (33) of the planetary gear set (31).

Example 16: The transmission (1) according to any one of examples 12-13, wherein the sun gearwheel (32) of the planetary gear set (31) is drivingly connected to the main shaft.

Example 17: The transmission (1) according to any one of examples 12-14, wherein in the high range gear state of the range gear arrangement (30), the ring gearwheel (35) of the planetary gear set (31) and the sun gearwheel (32) of the planetary gear set (31) are fixed to each other for common rotation.

Example 18: The transmission (1) according to any one of examples 12-15, wherein in the low range gear state of the range gear arrangement (30), the ring gearwheel (35) of the planetary gear set (31) is connected to a fixed node (70) of the transmission (1).

Example 19: The transmission (1) according to any one of the preceding examples, wherein the range gear arrangement (30) comprises a range gear shifting member (38) for selecting the high range gear state and the low range gear state.

Example 20: A powertrain (2) for a vehicle (100) comprising a first power unit (15), a second power unit (25), and the transmission (1) according to any one of the preceding examples.

Example 21: A vehicle (100) comprising a powertrain according to example 20.

Example 22: A method for operating a transmission (1) according to any one of examples 1-19, comprising:
- operating (S1) the transmission (1) in one of a high range gear state and a low range gear state,
- shifting (S2) the transmission (1) to the by-pass gear state, and
- when the transmission (1) is provided in the by-pass gear state, shifting (S3) the range gear arrangement (30) from the high range gear state to the low range gear state or vice versa.

## Claims

1. A transmission (1) for a vehicle (100) comprising:
- a first shiftable gear arrangement (10) and a second shiftable gear arrangement (20), the first shiftable gear arrangement (10) being shiftable between a first plurality of gears with different gear ratios and the second shiftable gear arrangement (20) being shiftable between a second plurality of gears with different gear ratios, wherein the first shiftable gear arrangement (10) is drivingly connected to a first input shaft (11) and the second shiftable gear arrangement (20) is drivingly connected to a second input shaft (21), wherein the first input shaft (11) is configured to be drivingly connected to a first power unit (15) and the second input shaft (21) is configured to be drivingly connected to a second power unit (25), and
- a range gear arrangement (30) drivingly connected to an output shaft (50), wherein the range gear arrangement (30) is shiftable between at least a low range gear state and a high range gear state, wherein a gear ratio of the range gear arrangement (30) in the low range gear state is greater than a gear ratio of the range gear arrangement (30) in the high range gear state, wherein the first shiftable gear arrangement (10) is configured to selectively transmit torque from the first input shaft (11) to the range gear arrangement (30) using one of the gears of the first plurality of gears and the second shiftable gear arrangement (20) is configured to selectively transmit torque from the second input shaft (21) to the range gear arrangement using one of the gears of the second plurality of gears, such that the range gear arrangement (30) together with the first and/or second shiftable gear arrangement (10, 20) provides a set of low range gears and a set of high range gears between one or both of the input shafts (11, 21) and the output shaft (50), wherein the transmission (1) is further shiftable to a by-pass gear state, in which the second shiftable gear arrangement (20) is shifted to a by-pass gear, the by-pass gear being comprised in the second plurality of gears, such that power is transferrable from the second input shaft (21) to the output shaft (50) without passing through the range gear arrangement (30).

2. The transmission (1) according to claim 1, wherein the range gear arrangement (30) is further shiftable to a neutral range gear state, and wherein, in the by-pass gear state, the range gear arrangement (30) is shiftable between the high range gear state, the low range gear state and the neutral range gear state without torque interruption between the second input shaft (21) and the output shaft (50).

3. The transmission (1) according to claims 1 or 2, further comprising:
a first reduction gear set (13), wherein the first input shaft (11) is configured to be drivingly connected to the first power unit (15) via the first reduction gear set (13),
and/or
a second reduction gear set (23), wherein the second input shaft (21) is configured to be drivingly connected to the second power unit (25) via the second reduction gear set (23).

4. The transmission (1) according to claim 3, wherein a gear ratio of the first reduction gear set (13) is different from a gear ratio of the second reduction gear set (23).

5. The transmission (1) according to any one of the preceding claims, wherein the first shiftable gear arrangement (10) comprises a first gear engagement member (17) configured to select one of first plurality of gears of the first shiftable gear arrangement (10), and wherein the second shiftable gear arrangement (20) comprises a second gear engagement member (27) configured to select one of the second plurality of gears of the second shiftable gear arrangement (20), the second plurality of gears comprising the by-pass gear.

6. The transmission (1) according to any one of the preceding claims, further comprising a main shaft (60) and a plurality of main gear sets (61, 62), each main gear set (61, 62) comprising a plurality of gearwheels (61a, 61b, 62a, 62b), wherein the main shaft (60) is rotationally connected or connectable to a gearwheel (61b, 62b) of the plurality of gearwheels of each main gear set (61, 62) and to a rotating part of the range gear arrangement (30).

7. The transmission (1) according to claim 6, when dependent on claim 5, further comprising a common countershaft (80) rotationally connected to a gearwheel of a common gear set (81), wherein the common gear set (81) is one of the plurality of main gear sets (61, 62), wherein the first gear engagement member (17) is configured to selectively couple the first input shaft (11) to the common countershaft (80) and the second gear engagement member (27) is configured to selectively couple the second input shaft (21) to the common countershaft (80).

8. The transmission (1) according to claim 7, wherein the countershaft (80) is arranged in between the first input shaft (11) and the second input shaft (21), such that the countershaft (80) is coaxial and aligned with at least one of the first input shaft (11) and the second input shaft (21).

9. The transmission (1) according to claims 5-8, further comprising a by-pass gear set (90) comprising a plurality of gearwheels (90a, 90b), wherein the by-pass gear set (90) is drivingly connected to the output shaft (50), wherein, in the by-pass gear state, the second gear engagement member (27) is configured to rotationally connect the second input shaft (21) to a gearwheel (90a) of the by-pass gear set (90).

10. The transmission (1) according to any one of the preceding claims, further comprising a differential gear arrangement (55) drivingly connected to the output shaft (50) and to respective drive shafts (51a, 51b) of a drive axle of the vehicle (100).

11. The transmission (1) according to any one of the preceding claims, wherein, in the by-pass gear state, the transmission (1) has a gear ratio from the second input shaft (21) to the output shaft (50) which is smaller than a gear ratio of the highest gear in the set of low range gears and greater than a gear ratio of the lowest gear in the set of high range gears.

12. The transmission (1) according to any one of the preceding claims, wherein the range gear arrangement (30) comprises a planetary gear set (31), the planetary gear set (31) comprising a sun gearwheel (32), a planet carrier (33) carrying one or more planet gearwheels (34), and a ring gearwheel (35),
optionally, wherein a gearwheel (90b) of the by-pass gear set (90) is connected or connectable to the planet carrier (33) of the planetary gear set (31), optionally, wherein the sun gearwheel (32) of the planetary gear set (31) is drivingly connected to the main shaft,
optionally, wherein in the high range gear state of the range gear arrangement (30), the ring gearwheel (35) of the planetary gear set (31) and the sun gearwheel (32) of the planetary gear set (31) are fixed to each other for common rotation, optionally, wherein in the low range gear state of the range gear arrangement (30), the ring gearwheel (35) of the planetary gear set (31) is connected to a fixed node (70) of the transmission (1),
optionally, wherein the range gear arrangement (30) comprises a range gear shifting member (38) for selecting the high range gear state and the low range gear state.

13. A powertrain (2) for a vehicle (100) comprising a first power unit (15), a second power unit (25), and the transmission (1) according to any one of the preceding claims.

14. A vehicle (100) comprising a powertrain according to claim 13.

15. A method for operating a transmission (1) according to any one of claims 1-12, comprising:
- operating (S 1) the transmission (1) in one of a high range gear state and a low range gear state,
- shifting (S2) the transmission (1) to the by-pass gear state, and
- when the transmission (1) is provided in the by-pass gear state, shifting (S3) the range gear arrangement (30) from the high range gear state to the low range gear state or vice versa.
